# DEMANDE DE BREVET EUROPEEN

(11) **EP 1 492 346 A1**
(43) Date de publication de la demande: **29.12.2004**
(21) Numéro de dépôt: 03405452.8
(22) Date de dépôt: 23.06.2003
(51) Int. Cl.: H04N 7/16

(54) **Système de traitement simultané de données d'au moins deux services de télévision à péage**

(71) Demandeur: Nagracard S.A., 1033 Cheseaux-sur-Lausanne (CH)
(72) Inventeur: Cochard, Jimmy, 1616 Attalens (CH); Gogniat, Christophe, 1022 Chavannes-prés-Renens (CH); Wirz, Christian, 1004 Lausanne (CH)
(74) Mandataire: Wenger, Joel-Théophile

(57) **Abrégé**

La présente invention concerne un système de traitement simultané de données d'au moins deux services de télévision à péage.

Ce système comporte un module de réception par flux de données et au moins deux modules d'extraction (EXT), chaque module d'extraction coopérant avec un module de débrouillage (DSC). Les paires de modules d'extraction et de débrouillage sont destinées chacune à traiter un service de télévision à péage. Le système selon l'invention de comprend en outre au moins une unité de traitement (CPU, ACU) recevant des messages de contrôle (ECM) du module d'extraction. Cette unité de traitement comprend des moyens de stockage temporaire (14) desdits messages de contrôle (ECM) associés à un identifiant du module d'extraction concerné. Elle comprend également des moyens de transmission desdits messages à un module de sécurité (SM) des moyens de réception desdits messages provenant du module de sécurité et des moyens de transmission de ces messages au module de débrouillage (DSC) associée audit module d'extraction. Les messages transmis entre le module de sécurité, l'unité ou les unités de traitement (CPU, ACU) et/ou les modules de débrouillage sont chiffrés au moyen de clés de chiffrement ou de clés d'appariement.

## Description

La présente invention concerne un système de traitement simultané de données d'au moins deux services de télévision à péage.

La majorité des systèmes actuels permettant le traitement de données de télévision à péage comportent une unité de traitement de données et un module de sécurité, souvent réalisé sous la forme d'une carte à microprocesseur ou carte à puce et donc un lecteur de carte.

Ces systèmes ne sont capables de traiter qu'un seul flux de données à la fois, pour un seul service de télévision à péage, de sorte qu'il n'est pas possible de regarder un événement et d'en enregistrer un autre par exemple.

Bien que les systèmes existant fonctionnent convenablement, une nouvelle demande est apparue pour des récepteurs capables de traiter plus d'un service à la fois. On appelle "service" l'ensemble de données extraites d'un flux de données numériques, qui définissent une chaîne de télévision avec son canal vidéo, ses canaux audio et accessoirement ses données textuelles.

Chaque service fait l'objet de conditions d'accès qui doivent donc être vérifiées indépendamment. Jusqu'à présent, le module de sécurité est connecté à un décodeur et traite un service à la fois. L'apparition de décodeurs multiservices se heurte donc aux limitations des capacités des modules de sécurité par rapport aux mécanismes mis en place pour garantir l'accès conditionnel audit service.

La présente invention se propose de fournir un système permettant de traiter simultanément plusieurs services d'un flux de données pour un abonné.

Ce but est atteint par un système de traitement simultané de données d'au moins deux services de télévision à péage, ces services étant transmis dans au moins un flux de données à accès conditionnel, ce système comportant pour chacun des services actifs sélectionnés, un module d'extraction et un module de débrouillage, chaque module d'extraction étant agencé pour extraire du flux de données, notamment des messages de contrôle et des messages d'autorisation, le système de traitement comprenant au moins une unité de traitement recevant lesdits messages de contrôle, caractérisé en ce que cette unité de traitement comprend des moyens de stockage temporaire desdits messages de contrôle associés à un identifiant du module d'extraction concerné, des moyens de transmission desdits messages à un module de sécurité, des moyens de réception desdits messages provenant du module de sécurité et des moyens de transmission de ces messages au module de débrouillage associée audit module d'extraction.

Ceci permet de gérer l'accès concurrent à plusieurs services destinés à plusieurs utilisateurs tout en garantissant le contrôle des droits de chaque service, à partir d'un seul module de sécurité.

L'invention présente en outre un avantage du point de vue de la gestion administrative du fait qu'il est possible de gérer un ensemble d'événements consommés par un même abonné à partir d'un module de sécurité unique. La facturation sera ainsi regroupée quel que soit l'utilisateur qui a consommé un événement car tout est contrôlé par le même module de sécurité.

Selon un mode de réalisation particulier de l'invention, le décodeur comprend plusieurs unités de traitement, chaque unité étant en charge d'un service et donc de recevoir les messages de contrôle pour ledit service. Le module de sécurité est relié à une unité de traitement dite principale et des liaisons sont prévues entre l'unité de traitement principale et les unités de traitement auxiliaires. Lorsqu'un message est reçu par une unité de traitement auxiliaire, il est transmis à l'unité principale pour que ce message soit traité par le module de sécurité.

Un aspect important de ces traitements est la prise en compte de la sécurité, en particulier par l'utilisation de clés d'appariement entre le module de sécurité et l'unité ou les unités de traitement.

Cet appariement est bien connu et fait l'objet d'une description dans le document EP1078524. Ainsi, un nouveau problème se pose lorsqu'il s'agit d'apparier un module de sécurité avec plusieurs unités de traitement.

Dans le cadre de la présente demande, il est prévu de créer des clés d'appariement dynamiques entre le module de sécurité et chaque unité de traitement.

La présente invention et ses avantages seront mieux compris en référence à la description de modes de réalisation et aux dessins annexés dans lesquels :
- la figure 1 est une vue générale d'une partie d'un décodeur multi-flux et multi-services;
- la figure 2 est une vue d'une partie similaire à la figure 1, d'une variante de réalisation mono-flux du système de l'invention;
- les figures 3 à 5 sont des vues schématiques de différents modes de réalisation d'un système selon l'invention comportant une seule unité de traitement;
- les figures 6 à 9 illustrent différents modes de réalisation d'un système selon l'invention comportant plusieurs unités de traitement; et
- la figure 10 est une vue d'ensemble du système de l'invention dans lequel une seule voie de réception des données est illustrée.

Le système selon l'invention est destiné à traiter simultanément plusieurs services de données de télévision à péage, ces services étant contenus dans un ou plusieurs flux de données. Les services traités sont des services actifs sélectionnés parmi tous ceux qui sont accessibles à l'abonné. A titre d'exemple, il est possible de traiter simultanément deux services parmi un bouquet de l'abonné, ce qui signifie qu'un événement d'un service peut être visionné sur un moniteur alors qu'un autre événement diffusé simultanément sur un autre service peut être enregistré ou visionné sur un autre moniteur.

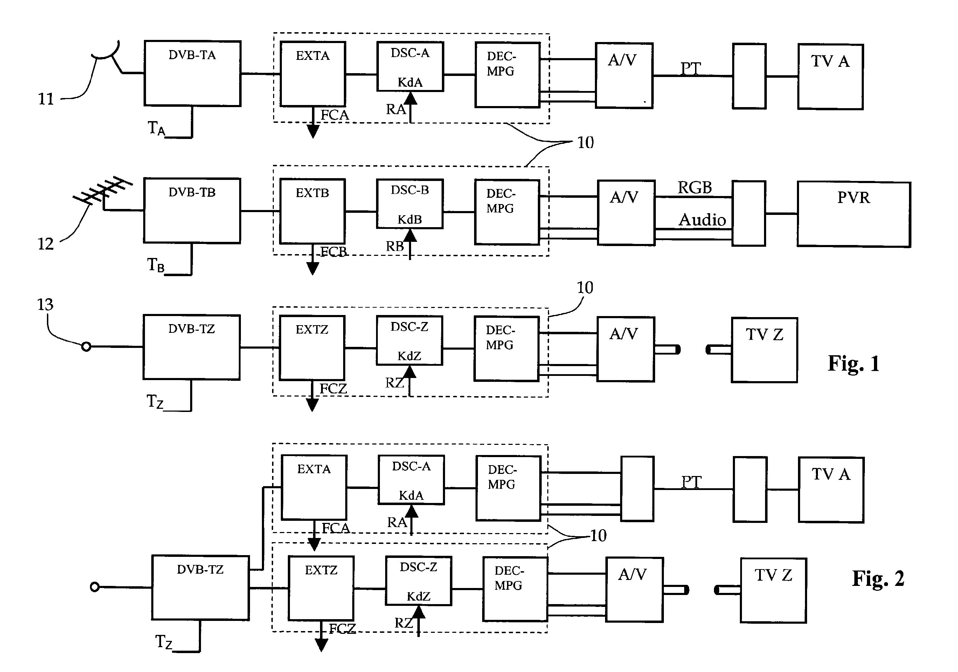

Chaque service actif est associé à une voie de réception. En d'autres termes, dans un système comprenant par exemple deux voies de réception, il est possible d'accéder à deux services simultanément et par conséquent, de "consommer" (visionner ou enregistrer) deux événements en même temps. Une telle voie de réception porte la référence 10 sur les figures 1, 2 et 10.

En référence à la figure 1, le dispositif selon l'invention comporte ici trois voies 10 de réception et de traitement de données permettant de fournir un affichage ou un enregistrement de trois services distincts. La première voie généralement référencée A, est de type réception par satellite illustré par une antenne parabolique 11. Les signaux reçus sont transmis à un module de réception DVB-TA approprié suivi d'un module d'extraction EXT dont le fonctionnement est expliqué ci-dessous.

La deuxième voie, portant la référence générale B, est de type réception terrestre et est illustrée schématiquement par une antenne "râteau" 12. Comme précédemment, les signaux reçus sont transmis à un module de réception DVB-TB, puis à un module d'extraction.

La troisième voie est référencée par la lettre Z et concerne une réception par câble 13, y compris la réception par un réseau d'ordinateurs tels qu'Internet. Dans ce cas également, les signaux reçus sont transmis à un module de réception DVB-TZ, puis à un module d'extraction EXT.

Le flux numérique provenant des modules de réception DVB-T contient, de façon bien connue, notamment des messages d'autorisation EMM et des messages de contrôle ECM en plus du flux de données chiffrées.

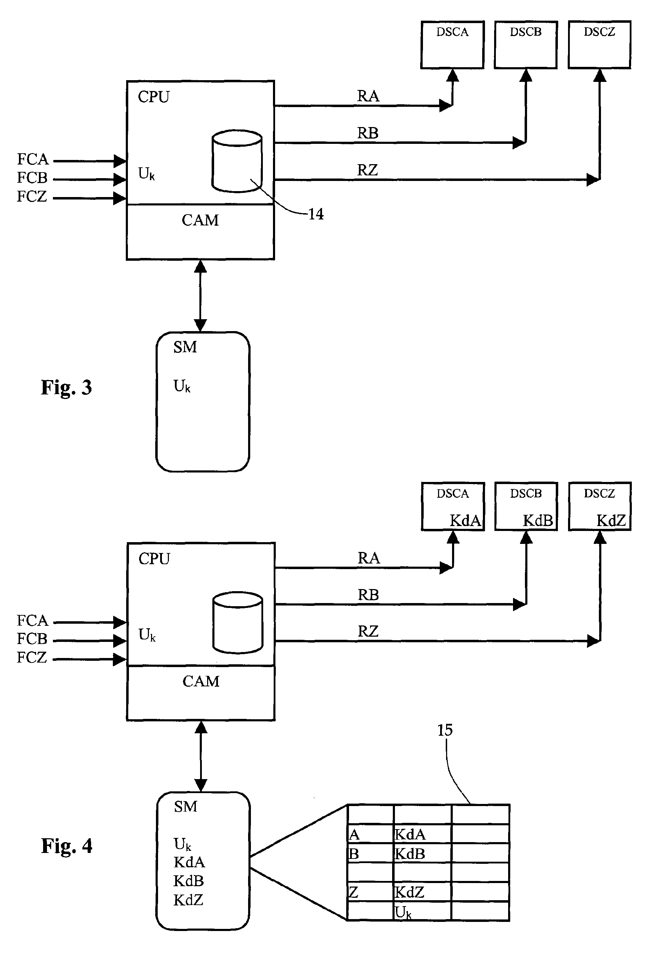

Pour déchiffrer les données, les messages de contrôle contenant des mots de contrôle sont transmis au module de sécurité qui est en charge de ce déchiffrement. Pour ceci, le flux de données reçu par les modules de réception DVB-T est introduit dans le module d'extraction EXT qui extrait en particulier les messages d'autorisation EMM et les messages de contrôle ECM. Ces messages sont transmis à une unité de traitement CPU avant d'être envoyés au module de sécurité SM. Une telle unité de traitement est notamment illustrée par les figures 3 à 9.

Dans un premier mode de réalisation illustré par la figure 3, l'unité de traitement CPU comporte notamment des moyens de réception d'une pluralité de messages, des moyens de stockage temporaire réalisés sous la forme d'une mémoire 14 pour des données, des moyens de communication avec un module de sécurité SM et des moyens de renvoi des messages déchiffrés. De façon bien connue, les moyens de communication comportent un module à accès conditionnel CAM qui est une interface entre l'unité de traitement et le module de sécurité. Ce module à accès conditionnel peut être réalisé sous forme de logiciel intégré à l'unité de traitement CPU ou sous forme de matériel. Dans la suite de la description, il n'est pas fait de distinction entre ces deux cas. L'invention est décrite en admettant que le module à accès conditionnel fait partie intégrante du module de traitement CPU, sauf si le contraire est précisé.

Dans le cas représenté par la figure 3, l'unité de traitement et le module de sécurité sont appariés au moyen d'une clé d'appariement Uₖ, ce qui signifie que les informations qu'ils s'échangent sont chiffrées au moyen de cette clé. La clé d'appariement est mémorisée dans le décodeur lors de sa fabrication et est connue du centre de gestion. Elle est transmise au module de sécurité par le centre de gestion lors de l'initialisation de l'ensemble décodeur/module de sécurité. Le module de sécurité ne pourra donc fonctionner qu'avec ce décodeur.

Pendant l'utilisation du système, des messages chiffrés sont envoyés par les modules d'extraction EXT et sont reçus par les moyens de réception des messages FCA, FCB, FCZ. Ces messages étant transmis de manière asynchrone, ils sont stockés temporairement dans la mémoire 14 jusqu'à leur traitement, associés à un identifiant de la source ou de la voie de réception. Pour être traité, un message, par exemple un message de contrôle ECM contenant un mot de contrôle CW pour le déchiffrement de données chiffrées, est transmis au module de sécurité SM par l'intermédiaire du module à accès conditionnel CAM. Ces messages sont chiffrés au centre de gestion par une clé transmission de l'opérateur envoyant les données.

L'unité de traitement CPU gère l'ensemble des messages grâce à ses moyens de stockage temporaire et, selon la disponibilité du module de sécurité, lui envoie des messages à déchiffrer.

Le module de sécurité se charge de déchiffrer un message et par exemple, lorsqu'il s'agit d'un message de contrôle ECM, d'en extraire les mots de contrôle CW. Il les rechiffre au moyen de la clé d'appariement Uₖ et les renvoie alors à l'unité de traitement CPU, qui fait le lien entre le message entrant et la réponse fournie par le module de sécurité. Le mot de contrôle CW est ensuite déchiffré avec la clé d'appariement Uₖ et renvoyé au module de débrouillage DSC de la voie de réception considérée.

Dans la réalisation de la figure 3, la clé d'appariement Uₖ peut être symétrique et donc identique dans l'unité de traitement et dans le module de sécurité. La clé pourrait également être asymétrique si les contraintes liées au temps de traitement ne sont pas critiques. Dans la pratique, c'est un mélange des deux techniques qui sera utilisée, à savoir un appariement basé sur une paire de clés asymétriques grâce auxquelles est générée une clé symétrique qui fait office de clé d'appariement dynamique.

Lorsque le module de sécurité a déchiffré un message, par exemple un mot de contrôle, il le rechiffre au moyen de la clé d'appariement Uₖ. Le message est transmis sous forme chiffrée à l'unité de traitement qui dispose de la clé d'appariement et qui peut donc déchiffrer le message et le transmettre.

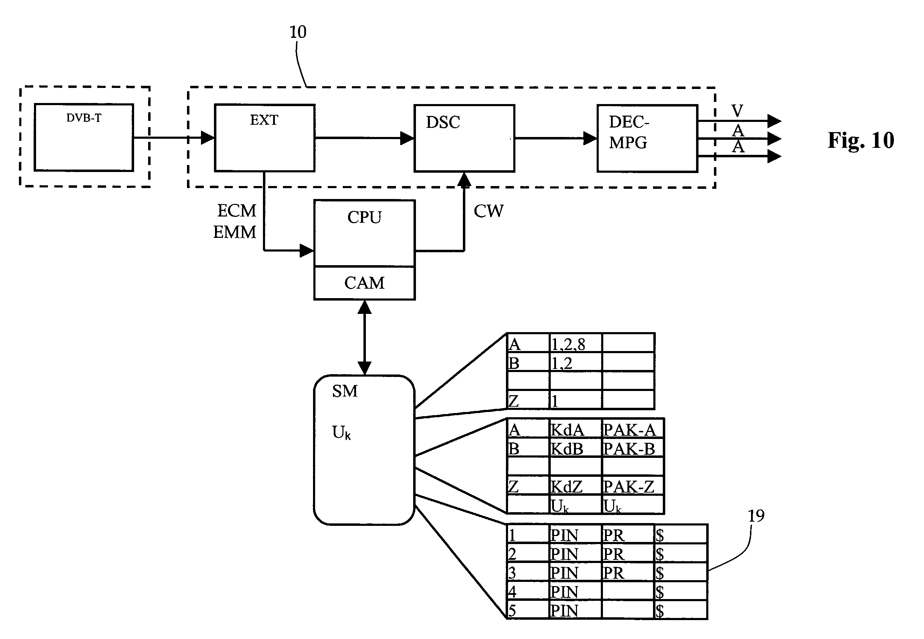

En se référant aux figures 1 et 10, les messages déchiffrés, c'est-à-dire les mots de contrôle CW, sont transmis à un module de débrouillage DSC propre à chacune des voies de réception mentionnées précédemment. Dans le cas où le message contient un mot de contrôle, le module de débrouillage l'utilise pour déchiffrer le flux de données chiffrées. Ces données sont ensuite utilisées de façon conventionnelle en fonction de l'application. Dans le cas de la télévision à péage, le flux est décompressé dans un décompresseur DEC-MPG de type MPEG par exemple, puis introduit dans un convertisseur audio/vidéo A/V et un modulateur de façon à en extraire les flux vidéo et audio et éventuellement d'autres flux de données.

Ces flux peuvent ensuite être utilisés par exemple pour être visionnés sur un ou plusieurs écrans de téléviseurs simultanément ou être enregistrés sur un enregistreur de type PVR (personnal video recorder) notamment.

Dans le mode de réalisation décrit ci-dessus, tous les messages déchiffrés par le module de sécurité, sont transmis de façon chiffrée au moyen de la même clé d'appariement Uₖ, mémorisée dans l'unité de traitement CPU du décodeur. Il peut être souhaitable, pour des raisons de sécurité, d'utiliser une clé d'appariement modifiée au cours du temps, de façon que la connaissance de la clé d'appariement ne permette pas de déchiffrer les données. Pour ceci, il est possible de générer une nouvelle clé d'appariement dynamique périodiquement, sur la base de la clé d'appariement statique mémorisée dans le décodeur. Plusieurs méthodes sont envisageables. L'une d'elles est décrite dans la demande de brevet suisse CH 1002/02.

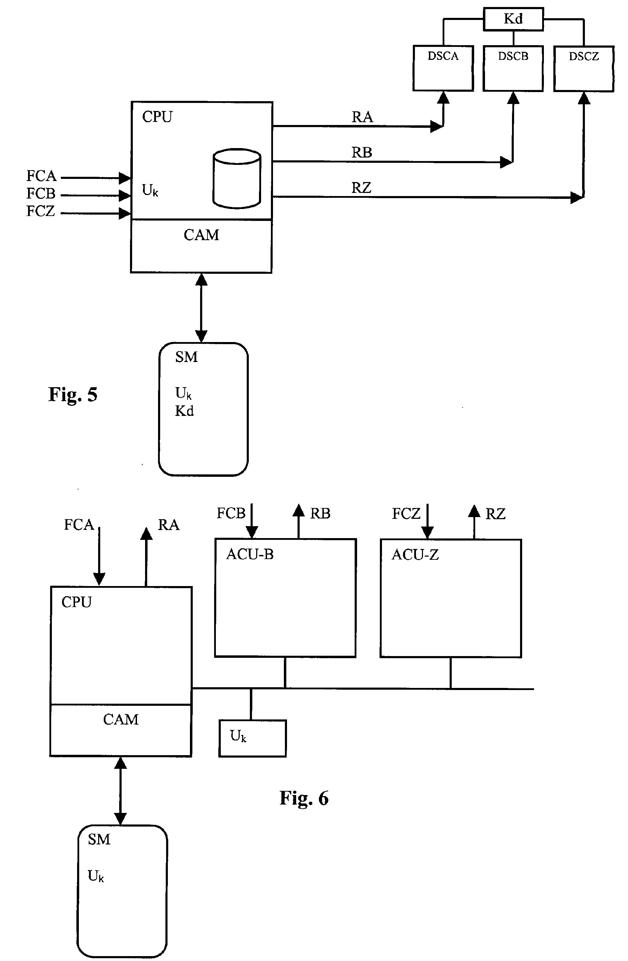

Dans le mode de réalisation de la figure 3, la clé d'appariement, qui peut être celle enregistrée dans l'unité de traitement ou la clé d'appariement dynamique, est unique et est utilisée pour toutes les communications entre le module de sécurité SM et l'unité de traitement CPU. Les communications entre l'unité de traitement CPU et les modules de débrouillage, en particulier l'envoi des mots de contrôle CW aux modules de débrouillage, se font en clair. Il est possible d'augmenter la sécurité du système en conservant le mot de contrôle CW chiffré jusqu'aux modules de débrouillage DSC. Ceci est décrit en référence aux figures 4 et 5.

En effet, il existe actuellement des modules de débrouillage contenant une clé destinée à déchiffrer tous les mots de contrôle entrant, rendant unique chaque mot de contrôle introduit dans un tel module. Même en accédant à un niveau matériel très bas, l'obtention par un tiers de ces mots de contrôle ne pourra lui servir à décrypter le flux de données. En général, ce type de décryption est relativement simple est peut être un mélange (XOR) entre le mot de contrôle et la clé matérielle.

Dans le cas représenté par la figure 4, chaque module de débrouillage DSC contient une clé de chiffrement KdA, KdB, KdZ qui lui est propre. Pour permettre au module de sécurité SM de communiquer avec chacun des modules de débrouillage ou pour pouvoir transmettre à ces modules de débrouillage un flux utilisable, le module de sécurité doit connaître la clé de chacun des modules de débrouillage. Lors de la mise en service d'un tel système, le centre de gestion, qui dispose de toutes ces clés, les envoie de façon sécurisée au module de sécurité. Ce dernier les stocke dans une table d'appariement 15 contenant d'une part les clés et d'autre part, un numéro d'identification tel qu'un numéro de série qui permet de déterminer quelle clé doit être utilisée avec quel module de débrouillage. Ceci permet de réaliser un appariement multiple et donc des communications sécurisées entre un seul module de sécurité et plusieurs modules de débrouillage.

Comme précédemment, les messages d'autorisation EMM et de contrôle ECM sont extraits par les modules d'extraction EXT et envoyés à l'unité de traitement CPU. Cette unité ajoute un identifiant au message, de façon à indiquer au module de sécurité la source ou la voie de réception de ce message et par conséquent, à permettre à ce module de sécurité de déterminer quelle clé d'appariement Kd doit être utilisée. Les messages reçus par le module de sécurité sont tout d'abord déchiffrés par la clé de transmission de l'opérateur. Le module de sécurité SM chiffre ensuite les mots de contrôle CW au moyen de la clé Kd propre au module de débrouillage concerné. Le module de débrouillage, et par conséquent la clé à utiliser, est connu grâce à l'identifiant qui est associé au message et à la table 15 contenue dans le module de sécurité. Chaque message ainsi chiffré est ensuite "surchiffré" au moyen de la clé d'appariement Uₖ "module de sécurité/unité de traitement" ou d'une clé d'appariement dynamique telle que décrite ci-dessus.

Lorsque les messages ont été chiffrés par la clé Kd propre au module de débrouillage concerné une première fois et par la clé d'appariement Uₖ une deuxième fois, ils sont transmis à l'unité de traitement CPU dans lesquels ils sont déchiffrés au moyen de la clé d'appariement Uₖ.

Le module de débrouillage DSC auquel l'unité de traitement CPU doit renvoyer le message est connu grâce à l'identifiant qui est associé à ce message. Il est donc transmis au module de débrouillage concerné dans lequel il est déchiffré au moyen de la clé Kd contenue dans ce module.

De cette manière, il est possible d'assurer un niveau de sécurité supplémentaire et de garantir qu'un message provenant d'une source particulière et destiné à un dispositif de réception particulier ne peut pas être utilisé par un autre dispositif de réception.

Il est également possible de n'utiliser qu'une clé de chiffrement entre le module de sécurité et les modules de débrouillage DSC, sans utiliser de clé d'appariement entre le module de sécurité et l'unité de traitement. Dans ce cas, les messages transmis par le module de sécurité à l'unité de traitement sont de toute façon chiffrés par les clés des modules de débrouillage. Il n'y a par contre qu'un seul niveau de chiffrement et plus deux comme dans l'exemple précédent.

La sécurité des transferts de données peut aussi être assurée en utilisant une clé d'appariement Uₖ entre l'unité de traitement CPU et le module de sécurité SM d'une part et une autre clé de chiffrement unique Kd entre le module de sécurité SM et les modules de débrouillage DSC. Ceci est représenté schématiquement par la figure 5. La clé Kd des modules de débrouillage est transmise au module de sécurité SM par le centre de gestion lors de l'initialisation du système.

Les messages provenant des modules d'extraction EXT sont envoyés à l'unité de traitement CPU qui les envoie au module de sécurité SM. Celui-ci déchiffre le message reçu au moyen de la clé transmission de l'opérateur, puis le chiffre une première fois au moyen de la clé d'appariement Uₖ entre le module de sécurité et les modules de débrouillage. Il "surchiffre" ensuite ce message chiffré au moyen de la clé de chiffrement Kd entre les modules de débrouillage et l'unité de traitement. Le message est alors transmis à l'unité de traitement CPU qui le déchiffre une première fois à l'aide de la clé d'appariement Uₖ entre le module de sécurité et l'unité de traitement. Le message est alors transmis au module de débrouillage DSC concerné qui le déchiffre à l'aide de la clé de chiffrement Kd entre le module de sécurité et les modules de débrouillage. Il est à noter que, comme tous les modules de débrouillage DSC contiennent la même clé Kd, il n'est pas nécessaire d'adjoindre un identifiant au message. L'unité de traitement CPU s'occupe de gérer la réception et le renvoi des messages aux sources correctes, ce qui peut être réalisé grâce aux moyen de stockage temporaire 14.

Dans le mode de réalisation illustré par les figures 6 à 9, le décodeur comporte plusieurs unités de traitement associées chacune à au moins une voie de réception des messages. Chaque unité de traitement est habilitée à traiter un service actif.

Dans le mode de réalisation illustré par la figure 6, le décodeur comporte trois unités de traitement recevant chacun, des messages provenant d'une voie de réception. L'une des unités de traitement CPU est une unité principale et les autres sont des unités auxiliaires ACU-B, ACU-Z. L'unité de traitement principale est la seule à être en communication directe avec le module de sécurité SM. Pour ceci, plusieurs modes de réalisation sont possibles. L'un d'eux consiste à prévoir qu'une seule unité de traitement, à savoir l'unité principale CPU comporte un module à accès conditionnel CAM. Cette réalisation est représentée par la figure 6. Un autre mode de réalisation non représenté est que chaque unité de traitement comporte un module à accès conditionnel CAM, mais que seul l'un d'entre eux est activé et est habilité à établir une communication avec le module de sécurité. Finalement, il est possible de prévoir un module à accès conditionnel CAM sous forme matérielle, qui n'est pas intégré à une unité de traitement particulière, mais qui est accessible par au moins une unité de traitement, et en général, par toutes les unités de traitement. Les unités de traitement auxiliaires ACU communiquent avec le module de sécurité SM par l'intermédiaire de l'unité principale CPU.

Dans le mode de réalisation illustré par la figure 6, la clé d'appariement Uₖ est une clé propre au décodeur et peut se situer dans une mémoire dudit décodeur.

Lorsqu'un flux arrive par la première voie de réception A associée à l'unité de traitement principale CPU, il est séparé en données et en messages par le module d'extraction EXT-A. Les messages sont envoyés l'unité principale CPU. Celle-ci l'envoie au module de sécurité SM par l'intermédiaire du module à accès conditionnel CAM. Le module de sécurité le déchiffre au moyen de la clé de transmission de l'opérateur. Le message est ensuite chiffré au moyen de la clé d'appariement Uₖ, puis renvoyé à l'unité de traitement principale CPU, également par l'intermédiaire du module à accès conditionnel. L'unité de traitement déchiffre alors le message et le renvoie au module de débrouillage DSCA de façon à pouvoir traiter le flux de données reçu par cette voie de réception.

Lorsqu'un flux provient d'une autre voie de réception, référencée B ou Z sur la figure 1 et associée à une unité de traitement auxiliaire ACU, l'extraction des mots de contrôle CW se passe de façon légèrement différente. Le flux est reçu par le module de réception, puis les messages d'autorisation EMM et de contrôle ECM sont extraits par le module d'extraction EXT. Ces messages sont transmis à l'unité de traitement auxiliaire ACU concernée. Depuis cette unité auxiliaire, ils sont transmis à l'unité de traitement principale CPU, qui les transmet au module de sécurité SM. Le message est alors déchiffré par la clé transmission de l'opérateur, contenue dans le module de sécurité. Il est ensuite rechiffré au moyen de la clé d'appariement Uₖ, puis transmis à l'unité de traitement principale CPU. Cette unité principale le déchiffre au moyen de la clé d'appariement Uₖ, puis le transmet en clair à l'unité de traitement auxiliaire ACU concernée. Ce message peut alors être transmis au module de débrouillage DSC pour utilisation.

Au lieu d'établir une communication en clair entre l'unité principale CPU et les unités auxiliaires ACU, il est possible de générer une clé de session, par exemple au moyen d'un algorithme tel que celui connu sous l'appellation Diffie-Hellman, qui ne nécessite pas de clé mémorisée initialement dans l'unité auxiliaire. Le message reçu par l'unité principale en provenance du module de sécurité est tout d'abord déchiffré à l'aide de la clé d'appariement, puis chiffré au moyen de la clé de session. Il est ensuite envoyé dans l'unité auxiliaire considérée dans laquelle il est déchiffré à l'aide de la clé de session. Après déchiffrement, le message est transmis au module de débrouillage pour utilisation.

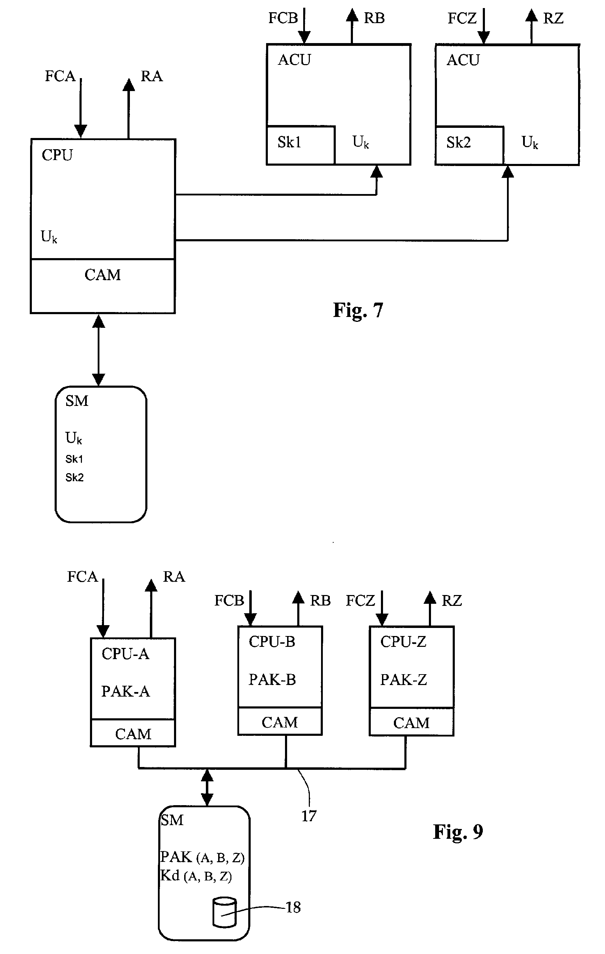

Comme cela est illustré schématiquement par la figure 7, il est possible d'utiliser des clés de chiffrement Sk1, Sk2 différentes pour chaque unité de traitement. Ainsi, le module de sécurité, selon la destination du message (ou des mots de contrôle CW) à renvoyer, va utiliser la clé de chiffrement propre au destinataire.

Dans cette forme d'exécution, l'unité de traitement principale CPU, si ce message ne la concerne pas, va simplement transmettre le message à l'unité de traitement auxiliaire concernée sans le déchiffrer.

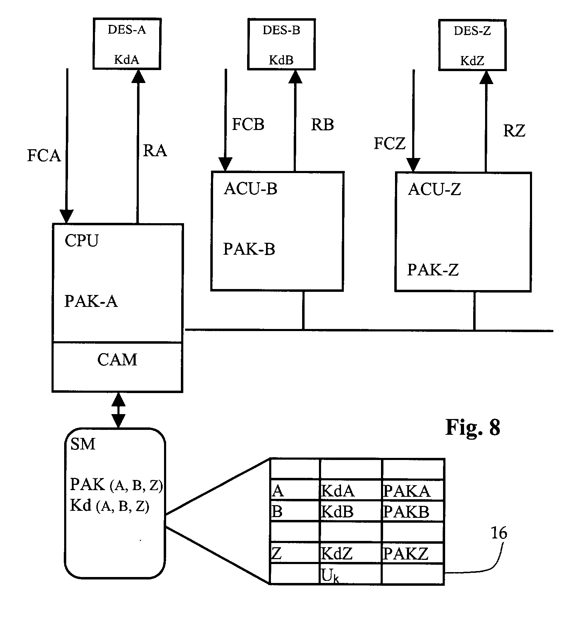

Dans le mode de réalisation illustré par la figure 8, la clé d'appariement n'est pas propre au décodeur, mais est unique et généralement différente pour chaque unité de traitement. Ces clés sont référencées PAK-A, PAK-B et PAK-Z sur la figure 8.

Le module de sécurité comporte une table 16 contenant la clé d'appariement unique PAK de chaque unité de traitement et à chaque message traité, le résultat sera chiffré par la clé d'appariement propre à l'unité de traitement destinataire.

Lorsque le message provient de la voie de réception associée à l'unité de traitement principale, il suit le même cheminement que ce qui a été expliqué en référence au mode de réalisation précédent.

Pour augmenter encore la sécurité des transferts de données, il est possible de prévoir une clé Kd dans chacun des modules de débrouillage DSC, cette clé étant généralement différente pour chacun d'eux. Comme dans le mode de réalisation précédent, chaque unité de traitement contient également une clé PAK, généralement différente pour chacun d'entre eux. Toutes ces clés sont connues par le module de sécurité qui les a reçues du centre de gestion lors de son initialisation.

Lorsqu'un message est reçu par le module de réception, par l'une des voies de réception, il est filtré de façon à en extraire les messages d'autorisation EMM et de contrôle ECM. Un message à traiter est transmis à cette unité qui, si elle n'a pas de communication directe avec le module de sécurité, va le transmettre à l'unité principale CPU qui l'expédie finalement au module de sécurité SM. Ce dernier le déchiffre avec la clé transmission de l'utilisateur. Il le chiffre ensuite une première fois avec la clé Kd du module de débrouillage, puis une deuxième fois avec la clé d'appariement PAK entre le module de sécurité et l'unité de traitement concernée. Il renvoie ce message à l'unité principale CPU (qui le transmet à l'unité auxiliaire si le message provenait de cette unité) qui le déchiffre avec la clé d'appariement PAK et le renvoie au module de débrouillage DSC. Ce dernier peut déchiffrer le message grâce à la clé Kd qu'il contient et le message peut être utilisé.

Dans le mode de réalisation illustré par la figure 9, chaque unité de traitement CPU est habilitée à communiquer directement avec le module de sécurité SM, sans passer par une unité principale. Toutes ces unités peuvent être considérées comme des unités de traitement principales telles que décrites en référence aux figures 6 à 8.

L'accès au module de sécurité par les différentes unités de traitement peut s'effectuer grâce à un bus 17 ou par l'intermédiaire d'un multiplexeur. Dans ce type d'application, le module de sécurité dispose de moyens de stockage temporaire 18 en vue du traitement de chaque message. L'identifiant d'un message devient donc une obligation afin que ce message soit, après traitement, renvoyé à la bonne unité de traitement CPU. Il est également possible de prévoir un module de sécurité suffisamment puissant pour traiter plusieurs messages simultanément. Il est à noter que les unités de traitement peuvent toutes être disposées dans un même boîtier ou au contraire être disposées dans des boîtiers différents. Dans ce cas, les boîtiers sont reliés de façon à former un réseau, ces boîtiers accédant à un seul module de sécurité.

Durant l'utilisation normale d'un décodeur, des informations sont transmises entre les différentes unités de traitement CPU, par exemple l'image de la mémoire du module de sécurité SM, aux fins d'accélérer la reconnaissance des services autorisée. Du fait que l'image de la mémoire du module de sécurité est maintenue à jour par l'unité de traitement principale, à chaque changement de cette image, des données doivent être transmises aux autres unités.

Une première solution déjà exposée est de générer une clé d'appariement dynamique Sk et de l'utiliser pour chiffrer la communication entre les unités de traitement.

Dans le cadre de l'invention, l'unité principale CPU envoie tout d'abord une requête demandant au module de sécurité SM de lui transmettre la clé d'appariement de l'unité auxiliaire ACU cible. Ceci est fait sous forme chiffrée au moyen de la clé d'appariement Uₖ entre le module de sécurité et l'unité principale. La clé de l'unité auxiliaire cible est obtenue par l'unité principale en déchiffrant le message qu'elle a reçu du module de sécurité au moyen de sa propre clé. De cette façon, toutes les communications entre l'unité principale et l'unité auxiliaire peuvent être chiffrées par la même clé d'appariement.

Ceci présente un avantage important du point de vue de la sécurité puisque cela garantit qu'une unité de traitement ne transmet des données utilisables qu'à une autre unité de traitement qui est dûment authentifiée par le centre de gestion. Ceci présente un avantage particulier dans le cas où les unités de traitement sont reliées entre elles par un bus, comme dans le cas de la figure 9, puisque cela permet d'éviter de donner des informations utilisables à un tiers qui se connecte de façon non-autorisée à ce bus.

Le système selon l'invention permet de gérer le déchiffrement des données et donc la visualisation d'événements de télévision à péage de plusieurs utilisateurs simultanément, sur la base de profils d'utilisateur. Ces profils d'utilisateur définissent de façon bien connue, les droits associés à chaque utilisateur, ces derniers étant identifiés au moyen d'un code personnel d'identification (PIN code) généralement numérique ou alphanumérique.

Le module de sécurité contient une table 19 de profils d'utilisateurs, représentée par la figure 10, cette table contenant pour chaque utilisateur, un numéro d'utilisateur, un code personnel et des droits associés à des services ou des informations de classement (rating) correspondants à une classification des événements de télévision à péage.

Lors de la mise en service d'une voie de réception, il est demandé à l'utilisateur de s'identifier au moyen de son numéro d'utilisateur et de son code personnel. Le module de sécurité vérifie dans un premier temps si le numéro d'utilisateur introduit correspond bien au code personnel. Si tel n'est pas le cas, le déchiffrement des données est arrêté. Si les deux valeurs correspondent, la table des profils permet de déterminer les informations de classement liées au profil d'utilisateur introduit.

L'unité de traitement va conserver dans sa mémoire de travail les deux informations, à savoir le code personnel et le numéro d'utilisateur.

Lorsqu'un message est reçu par le décodeur, il est, comme dans les modes de réalisation précédents, transmis au module d'extraction qui en sort notamment les messages de contrôle ECM contenant les mots de contrôle CW et des informations de classement du même type que les informations de classement de la table des profils. L'unité de traitement en charge du message ajoute le numéro d'utilisateur et le code personnel qui lui ont été fourni par l'utilisateur. Ce message ainsi complété est transmis au module de sécurité, soit directement, soit par l'intermédiaire d'une autre unité de traitement. Le message est ensuite déchiffré dans le module de sécurité au moyen de la clé transmission de l'opérateur.

Ce module de sécurité vérifie ensuite si l'utilisateur identifié par le code personnel est autorisé à traiter le message reçu, en fonction des informations de classement. A titre d'exemple, un profil d'utilisateur correspondant à un enfant pourrait être associé à des événements pour enfants. Si le module de sécurité reçoit un message de contrôle dont les informations de classement indiquent qu'il concerne un événement sportif pour lequel les droits ne sont pas présents dans le profil de l'utilisateur identifié, les mots de contrôle CW ne seront pas renvoyés par le module de sécurité et l'événement ne pourra pas être visualisé. Par contre, lorsqu'un autre utilisateur s'identifie en donnant son numéro d'utilisateur et son code personnel, dans le cas où le profil correspondant dans la table des profils indique que les droits sont présents pour cet utilisateur, les messages seront traités comme cela a été décrit précédemment (évidemment pour autant que le code personnel soit correct). Ils vont donc être déchiffrés et renvoyés au module de débrouillage qui pourra les utiliser pour permettre de visualiser un événement.

## Revendications

**1.** Système de traitement simultané de données d'au moins deux services de télévision à péage, ces services étant transmis dans au moins un flux de données à accès conditionnel, ce système comportant pour chacun des services actifs sélectionnés, un module d'extraction (EXT) et un module de débrouillage (DSC), chaque module d'extraction étant agencé pour extraire du flux de données, notamment des messages de contrôle (ECM) et des messages d'autorisation (EMM), le système de traitement comprenant au moins une unité de traitement (CPU, ACU) recevant lesdits messages de contrôle (ECM), **caractérisé en ce que** cette unité de traitement comprend des moyens de stockage temporaire (14) desdits messages de contrôle (ECM) associés à un identifiant du module d'extraction concerné, des moyens de transmission desdits messages à un module de sécurité (SM), des moyens de réception desdits messages provenant du module de sécurité et des moyens de transmission de ces messages au module de débrouillage (DSC) associée audit module d'extraction.

**2.** Système de traitement selon la revendication 1, **caractérisé en ce qu'**il comporte une unité de traitement (CPU) unique agencée pour traiter les messages en provenance de tous les modules d'extraction (EXT).

**3.** Système de traitement selon la revendication 2, **caractérisé en ce que** l'unité de traitement (CPU) est appariée audit module de sécurité (SM) au moyen d'une clé d'appariement (Uₖ) permettant de chiffrer et déchiffrer les messages entre cette unité de traitement et le module de sécurité (SM).

**4.** Système de traitement selon la revendication 2 ou 3, **caractérisé en ce que** chaque module de débrouillage (DSC) est apparié audit module de sécurité (SM) au moyen d'une clé de chiffrement (Kd) permettant de chiffrer et déchiffrer les messages entre ce module de sécurité et chaque module de débrouillage.

**5.** Système de traitement selon la revendication 4, **caractérisé en ce que** la clé de chiffrement (Kd) des modules de débrouillage (DSC) est identique pour chaque module.

**6.** Système de traitement selon la revendication 4, **caractérisé en ce que** la clé de chiffrement (Kd) des modules de débrouillage (DSC) est différente pour chaque module.

**7.** Système de traitement selon la revendication 1, **caractérisé en ce qu'**il comporte une unité de traitement (CPU, ACU) par service actif sélectionné.

**8.** Système de traitement selon la revendication 7, **caractérisé en ce que** les unités de traitement (CPU, ACU) sont disposées dans un même boîtier.

**9.** Système de traitement selon la revendication 7, **caractérisé en ce que** les unités de traitement (CPU, ACU) sont disposées dans des boîtiers différents, ces boîtiers étant connectés entre eux au moyen d'un réseau.

**10.** Système de traitement selon la revendication 8 ou 9, **caractérisé en ce que** le module de sécurité (SM) est apparié avec chaque unité de traitement (CPU, ACU) au moyen d'une clé d'appariement (Uₖ) unique par boîtier, cette clé d'appariement étant utilisée par toutes les unités de traitement (CPU, ACU).

**11.** Système de traitement selon la revendication 8 ou 9, **caractérisé en ce que** le module de sécurité (SM) est apparié avec chaque unité de traitement (CPU, ACU) au moyen d'une clé d'appariement (PAK) entre le module de sécurité (SM) et ladite unité de traitement, cette clé étant différente pour chaque unité de traitement.

**12.** Système de traitement selon la revendication 7, **caractérisé en ce que** le module de sécurité est apparié avec chaque module de débrouillage (DSC) au moyen d'une clé de chiffrement (Kd) permettant de chiffrer et déchiffrer les messages entre le module de sécurité (SM) et chaque module de débrouillage.

**13.** Système de traitement selon la revendication 7, **caractérisé en ce que** les moyens de réception des messages traités par le module de sécurité (SM) forment un module à accès conditionnel (CAM) et **en ce que** les unités de traitement (CPU, ACU) utilisent toutes le même module à accès conditionnel (CAM).

**15.** Système de traitement selon l'une quelconque des revendications précédentes, **caractérisé en ce que** le module de sécurité (SM) comporte une table contenant tout ou partie des clés de chiffrement (Uₖ, PAK, Kd).
